(19) Europäisches Patentamt / European Patent Office / Office européen des brevets

(11) **EP 2 830 900 B1**

(12) **FASCICULE DE BREVET EUROPEEN**

(45) Date de publication et mention de la délivrance du brevet:
**30.08.2017 Bulletin 2017/35**

(21) Numéro de dépôt: **13714577.7**

(22) Date de dépôt: **22.03.2013**

(51) Int Cl.:
**B60J 3/04** (2006.01)

(86) Numéro de dépôt international:
**PCT/EP2013/056035**

(87) Numéro de publication internationale:
**WO 2013/143998 (03.10.2013 Gazette 2013/40)**

(54) **DISPOSITIF D'AIDE À LA CONDUITE NOCTURNE DES VÉHICULES AUTOMOBILES**

VORRICHTUNG ZUR UNTERSTÜTZUNG DER NACHTFAHRT VON FAHRZEUGEN

DEVICE FOR NIGHTTIME MOTOR VEHICLE DRIVING ASSISTANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2012 FR 1252672**

(43) Date de publication de la demande:
**04.02.2015 Bulletin 2015/06**

(73) Titulaire: **Valeo Vision**
**93012 Bobigny Cedex (FR)**

(72) Inventeur: **FLEURY, Benoist**
**F-94300 Vincennes (FR)**

(56) Documents cités:
**WO-A1-95/12502      WO-A1-96/20846**
**DE-A1- 3 836 095      US-A- 5 486 938**

EP 2 830 900 B1

**Description**

*Domaine de l'invention*

La présente invention concerne les procédés et les dispositifs destinés à apporter une aide à la conduite des véhicules automobiles, particulièrement lorsque la luminosité extérieure est faible, et impose l'allumage des feux de croisement (encore appelés codes).

Les faisceaux lumineux émis par les dispositifs d'éclairage équipant les véhicules sont régis par des réglementations internationales, qui fixent des intensités maximales et des minimales à respecter, par exemple sur un écran placé à distance et dans l'axe du dispositif d'éclairage. Dans le cas particulier des faisceaux de croisement, ces réglementations ont pour finalité de simultanément

- fournir au conducteur du véhicule équipé de ce dispositif d'éclairage un éclairage satisfaisant de la scène de route sur laquelle il circule, pour qu'il puisse appréhender son environnement dans les meilleures conditions possibles, et
- éviter d'éblouir les conducteurs d'autres véhicules, qu'ils circulent en sens inverse (véhicules croisés) ou qu'ils circulent dans le même sens (véhicules suivis).

Lorsque les feux de croisement d'un véhicule croisé sont allumés, il suffit que le projecteur qui les émet soit mal réglé, ou même légèrement déréglé, pour que ces feux soient éblouissants, le faisceau de croisement du véhicule croisé comportant alors des rayons lumineux situés au dessus d'une limite réglementaire supérieure appelée coupure, et prohibés par la réglementation.

Par ailleurs, même si les dispositifs d'éclairage des véhicules croisés sont parfaitement réglés, il suffit que la glace de fermeture de ces dispositifs, au travers de laquelle passent les rayons lumineux, soit sale pour que le faisceau émis soit éblouissant. En effet, les saletés présentes sur la glace de fermeture se comportent alors en centres de diffusion de la lumière, c'est-à-dire comme des sources lumineuses secondaires, qui émettent de la lumière dans toutes les directions. Plus une glace de fermeture est sale, plus le dispositif d'éclairage émet un faisceau éblouissant.

Les feux de croisement des véhicules croisés peuvent encore être éblouissants dans une autre situation, dans laquelle le coffre arrière de ces véhicules contient des bagages relativement lourds. Dans ce cas, l'assiette du véhicule est modifiée et n'est plus horizontale, l'avant du véhicule étant relevé. Des correcteurs, à commande manuelle ou automatiques sont normalement prévus pour rabattre vers le bas le faisceau lumineux afin qu'il redevienne conforme à la réglementation. Dans le cas où le correcteur n'a pas été actionné ou s'il est défaillant, le faisceau de croisement comportera des rayons lumineux situés au dessus de la limite supérieure réglementaire, éblouissants et prohibés par la réglementation.

Ces risques d'éblouissement par un véhicule arrivant en sens inverse sont encore accrus si ce véhicule est un véhicule poids lourd, dont les projecteurs sont généralement installés plus haut que ceux des véhicules légers.

La présente invention se place dans ce contexte, et propose un procédé et un dispositif permettant à un conducteur de véhicule de ne pas être ébloui par des véhicules croisés dont le faisceau de croisement est rendu éblouissant notamment dans l'une des situations évoquées ci-dessus.

*État de la technique*

Diverses solutions ont été tentées pour pallier à cette situation.

On connaît par exemple du document FR 2 846 756 un procédé pour améliorer la perception nocturne des conducteurs qui comporte un premier filtre polarisant au voisinage des sources lumineuses, et un second filtre polarisant, de direction de polarisation perpendiculaire à celle du premier filtre, dans le champ de vision des conducteurs.

Une telle solution est théoriquement satisfaisante, mais impliquerait, pour être efficace, que la totalité du parc automobile roulant soit pourvue de filtres polarisants sur la glace de protection des dispositifs d'éclairage, et que le conducteur soit également pourvu de lunettes polarisantes.

On connaît également de EP 0 498 143 A1 un dispositif anti-éblouissement comportant un capteur optique fournissant un signal proportionnel à la valeur de la luminosité ambiante dans un angle de mesure prédéterminé. Le capteur transmet ce signal à un circuit de mesure et de comparaison avec une valeur de seuil prédéterminée. Quand la valeur mesurée est supérieure à la valeur prédéterminée, le circuit de comparaison émet un signal de commande de l'alimentation d'un écran électrosensible qui est conçu pour passer d'un état de totale transparence en l'absence de signal à un état partiellement transparent ou coloré lorsque le signal est transmis, puis pour retourner à l'état transparent lors de l'extinction du signal.

L'inconvénient de ce dispositif est qu'il affecte la perception de l'ensemble de la scène de route. Si la luminosité ambiante dépasse le seuil autorisé, l'ensemble de la scène de route sera obscurci, alors que l'excès de luminosité peut n'être provoqué que par un élément ponctuel dans la scène de route. Le conducteur équipé de ce dispositif anti-éblouissement risque alors de ne pas voir certains éléments importants dans cette scène de route, comme par exemple un panneau de signalisation routière avertissant de l'imminence d'un danger ou encore la surface de la route éclairée par son propre faisceau d'éclairage.

On connaît, par exemple du document WO 96/20846, un procédé et un dispositif d'atténuation de la lumière des projecteurs des véhicules croisés, comprenant l'émission d'impulsions lumineuses par les projecteurs du véhicule, et la commande de la transparence de filtres devant les yeux du conducteur en synchronisme avec les impulsions lumineuses émises par les projecteurs du véhicule, la transparence des filtres étant maximale pendant une durée supérieure à celle des impulsions lumineuses. De la sorte, la luminosité de projecteurs adverses est réduite.

Le document US 5 486 938 divulgue également un système anti-éblouissement pour conducteurs, comprenant un générateur qui pilote en synchronisme des projecteurs pourvus de lampes à éclair et un écran à cristaux liquides, disposé devant les yeux du conducteur, de manière que l'écran ait sa transmission maximale lors de l'émission des impulsions lumineuses.

Ces deux derniers documents présentent des systèmes encombrants et d'utilisation malaisée, dont le fonctionnement est relativement lent avec des temps de réponse relativement importants, et dans lesquels la transparence des filtres ou des écrans utilisés est toujours inférieure à 50 %, c'est-à-dire que ces systèmes, utilisant des cristaux liquides, induisent une diminution de l'intensité lumineuse perçue, même lorsqu'ils présentent leur transmission maximale.

*Exposé de l'invention*

La présente invention se place dans ce contexte et elle a pour but d'apporter une aide à la conduite nocturne d'un véhicule automobile, en procurant au conducteur de ce véhicule :

- une vision intégrale de la scène de route telle qu'elle est éclairée par les dispositifs d'éclairage de son véhicule, et
- une vision atténuée des sources lumineuses présentes dans la scène de route, étrangères au véhicule piloté par le conducteur, et qui pourraient perturber sa perception de la scène de route,
- sans par ailleurs entraver les mouvements du conducteur ou restreindre son champ de vision.

Dans ce but, la présente invention a pour objet un dispositif d'aide à la conduite nocturne d'un véhicule automobile, le véhicule étant équipé d'au moins un dispositif d'éclairage pour émettre un faisceau d'éclairage réglementaire de la scène de route en avant du véhicule,

- l'éclairement émis par le dispositif d'éclairage étant variable entre une valeur maximale et une valeur minimale,
- le dispositif comportant au moins un écran à transmission variable disposé entre la scène de route et le conducteur du véhicule,
- le coefficient de transmission de l'écran étant variable entre une valeur maximale et une valeur minimale,

- l'allumage d'au moins une source lumineuse du dispositif d'éclairage et le coefficient de transmission de l'écran à transmission variable étant pilotés par la même centrale de commande en synchronisme,
- l'éclairement atteignant sa valeur maximale sensiblement lorsque le coefficient de transmission de l'écran atteint sa valeur maximale.

Selon l'invention, la centrale de commande pilote un circuit de gestion d'alimentation de la source lumineuse du dispositif d'éclairage et un émetteur d'ondes de télécommande à destination d'un récepteur.

Selon d'autres caractéristiques de l'invention, considérées séparément ou en combinaison :

- le coefficient de transmission de l'écran à transmission variable est commandé par un récepteur recevant les ondes de télécommande émises par l'émetteur d'ondes de télécommande ;
- l'écran à transmission variable est constitué :

  - par le pare-brise du véhicule,
  - par un écran disposé entre le pare-brise du véhicule et le conducteur du véhicule, ou
  - par des lunettes portées par le conducteur du véhicule.

- la centrale de commande pilote :

  - le circuit de gestion d'alimentation de la source lumineuse du dispositif d'éclairage et
  - l'émetteur d'ondes de télécommande à destination du récepteur,

de telle sorte que les variations de l'éclairement émis par le dispositif d'éclairage et du coefficient de transmission de l'écran à transmission variable soient synchrones, et atteignent leurs valeurs maximales en même temps ;

- la centrale de commande pilote :
- le circuit de gestion d'alimentation de la source lumineuse du dispositif d'éclairage et
- l'émetteur d'ondes de télécommande à destination du récepteur,

de telle sorte que la durée pendant laquelle le coefficient de transmission présente sa valeur maximale est supérieure à la durée pendant laquelle l'éclairement présente sa valeur maximale ;

- l'éclairement émis par le dispositif d'éclairage et le coefficient de transmission de l'écran à transmission variable sont variables selon un mode de Modulation de Largeur d'Impulsions ;
- la valeur minimale de l'éclairement est nulle ;
- la valeur minimale du coefficient de transmission de l'écran à transmission variable est sensiblement nulle ;

- l'émetteur d'ondes de télécommande et le récepteur de ces ondes de télécommande communiquent par ondes radio, infrarouges ou ultrasonores ;
- l'émetteur d'ondes de télécommande et le récepteur de ces ondes de télécommande communiquent selon un protocole de communication sans fil ;
- la source lumineuse du dispositif d'éclairage est une diode électroluminescente ou une diode laser, la source lumineuse étant alimentée par un circuit de gestion, et recevant une puissance électrique variable périodiquement entre une valeur maximale et une valeur minimale ;
- la puissance électrique est variable selon un mode de Modulation de Largeur d'Impulsions ;
- l'écran à transmission variable est constitué d'un écran à cristaux liquides ;
- l'écran à transmission variable est constitué d'un système microélectromécanique ;
- l'écran à transmission variable est associé à une alimentation électrique autonome ;
- le coefficient de transmission de l'écran à transmission variable est commandé en synchronisme avec des indications visuelles lumineuses présentées par le tableau de bord du véhicule et relatives au fonctionnement ou à l'environnement du véhicule ;
- la luminosité des indications visuelles est augmentée d'un facteur égal à l'inverse du rapport cyclique du mode de Modulation de Largeur d'Impulsions quand le coefficient de transmission de l'écran à transmission variable est à sa valeur maximale ;
- le coefficient de transmission de l'écran à transmission variable est commandé en synchronisme avec l'éclairage intérieur du véhicule, l'éclairage intérieur n'étant allumé que lorsque le coefficient de transmission de l'écran à transmission variable est à sa valeur minimale.

L'invention a également pour objet un écran à transmission variable apte à être disposé entre le conducteur d'un véhicule automobile et la scène de route en avant du véhicule.

Selon l'invention, le coefficient de transmission de l'écran est variable selon un mode de Modulation de Largeur d'Impulsions entre une valeur maximale et une valeur minimale, le coefficient de transmission de l'écran à transmission variable étant piloté par une centrale de commande selon un protocole de communication sans fil, par des ondes de télécommande émises par un émetteur de la centrale de commande et reçues par un récepteur.

*Brève description des Figures*

D'autres buts, caractéristiques et avantages de la présente invention ressortiront clairement de la description qui va maintenant être faite d'un exemple de réalisation donné à titre non limitatif en référence aux dessins annexés sur lesquels :

- La Figure 1 représente schématiquement en coupe partielle un véhicule équipé d'un dispositif selon la présente invention ;
- La Figure 2 représente schématiquement en vue de dessus un faisceau de croisement réglementaire émis par un véhicule ;
- La Figure 3 représente schématiquement une scène de route telle qu'elle est observée par un conducteur d'un véhicule,
- Les Figures 4A et 4B représentent une scène de route telle qu'observée par le conducteur du véhicule représenté sur la Figure 1 ; la Figure 4A sans le dispositif selon la présente invention, et la Figure 4B le véhicule étant équipé du dispositif selon la présente invention,
- La Figure 5 représente le champ visuel moyen d'un conducteur de véhicule,
- Les Figures 6 représentent des diagrammes de l'évolution temporelle de la puissance électrique fournie aux sources lumineuses des projecteurs du véhicule de la Figure 1 sur la Figure 6A, de l'intensité lumineuse émise par ces projecteurs sur la Figure 6B, et de l'évolution temporelle du coefficient de transmission d'un écran à transmission variable sur la Figure 6C, et
- Les Figures 7A et 7B représentent des variantes des Figures 6B et 6C respectivement, avec des diagrammes de l'évolution temporelle de l'intensité lumineuse émise par les projecteurs sur la Figure 7A, et de l'évolution temporelle du coefficient de transmission d'un écran à transmission variable sur la Figure 7B.

*Description détaillée de modes de réalisation de l'invention*

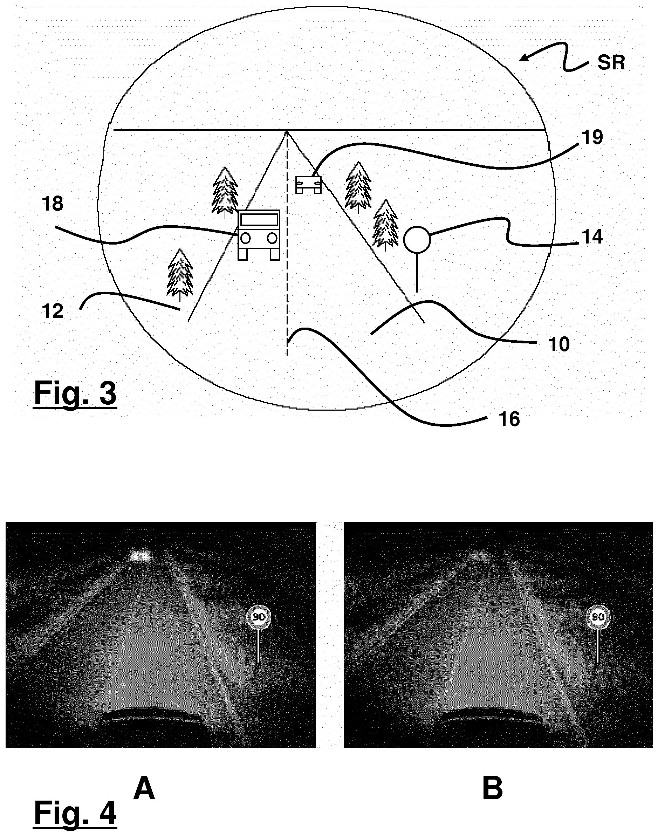

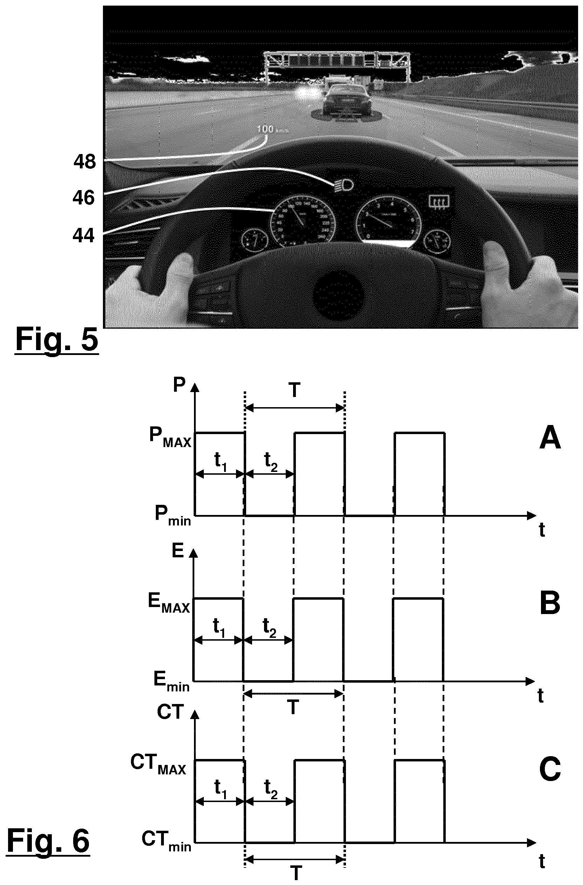

En référence tout d'abord à la Figure 3, on a représenté schématiquement une scène de route SR telle qu'elle peut être perçue par un conducteur dans une situation de conduite habituelle. Les Figure 4A, 4B et 5 représentent des vues de cette scène de route, en conduite nocturne, après allumage des feux de croisement.

La scène de route SR comporte typiquement, outre la route 10 elle-même, des éléments de bord de route, par exemple des constructions ou, comme dans l'exemple représenté, des bas-côtés et des arbres, des panneaux de signalisation, et d'autres véhicules, suivis ou croisés.

On peut ainsi classer les éléments visibles dans une scène de route éclairée par les feux de croisement d'un véhicule en plusieurs catégories :

- les éléments passifs ou sources passives, tels que les éléments du décor, par exemple la route 10, les bas-côtés et les arbres 12, les constructions avoisinantes, etc., c'est-à-dire les éléments qui reçoivent la lumière émise par les projecteurs du véhicule, et qui la diffusent indifféremment dans toutes les directions ou, en d'autres termes, qui n'ont qu'une luminosité induite : plus ils sont éclairés, plus ils sont lumineux ;

- les éléments semi-actifs ou sources semi-actives, tels que les panneaux de signalisation 14, les lignes de marquage fluorescent 16 de la chaussée, les catadioptres d'autres véhicules suivis 19 (circulant dans le même sens), etc., c'est-à-dire les éléments qui reçoivent la lumière émise par les projecteurs du véhicule, et qui renvoient une partie notable de cette lumière dans une direction privilégiée, en général approximativement dans la direction d'où elle provient ; en d'autres termes, ces éléments n'ont également qu'une luminosité induite, mais supérieure à celle des éléments passifs,

- les éléments actifs ou sources actives, tels que les dispositifs d'éclairage 18 d'autres véhicules croisés (circulant en sens contraire), les feux tricolores de signalisation, les réverbères, etc., c'est-à-dire les éléments qui sont eux-mêmes des sources lumineuses et émettent de la lumière par eux-mêmes, indépendamment de l'éclairage qu'ils reçoivent ; en d'autres termes, ces éléments possèdent une luminosité intrinsèque, quel que soit l'éclairage qu'ils reçoivent.

Ainsi, tous les éléments de la scène de route sont perçus par un conducteur avec une luminosité qui est la somme :

- de leur luminosité intrinsèque, nulle pour les éléments passifs et semi-actifs, et
- de leur luminosité induite, négligeable pour les éléments actifs.

Dans la scène de route de la Figure 3, on voit ainsi :

- les sources passives telles que la route 10, les bas-côtés et les arbres 12,
- les sources semi-actives telles que le panneau de signalisation routière 14, les lignes de marquage 16 de la chaussée et des catadioptres 19, et
- les sources actives telles que les projecteurs 18 d'un véhicule venant en sens inverse.

Les éléments passifs et semi-actifs ne posent en général pas de problème d'éblouissement intolérable, les panneaux de signalisation de grande surface qui pourraient créer ce genre de désagrément étant généralement situés en dehors de la proximité immédiate de la route.

Les seuls problèmes d'éblouissement ne viennent donc que des éléments actifs, comme les projecteurs 18 des véhicules circulant en sens inverse, pour les différentes raisons exposées plus haut en introduction.

La présente invention propose une solution à ce problème, en diminuant la luminosité des éléments actifs, sources potentielles d'éblouissement, sans toutefois modifier la luminosité des éléments passifs ou semi-actifs, qui peuvent constituer des éléments de sécurité importants. Pour ce faire, l'invention prévoit de disposer un écran sélectif interposé entre le conducteur et la scène de route, filtrant les rayons lumineux provenant des sources actives pour les atténuer, et transparents aux rayons lumineux provenant des sources passives ou semi-actives.

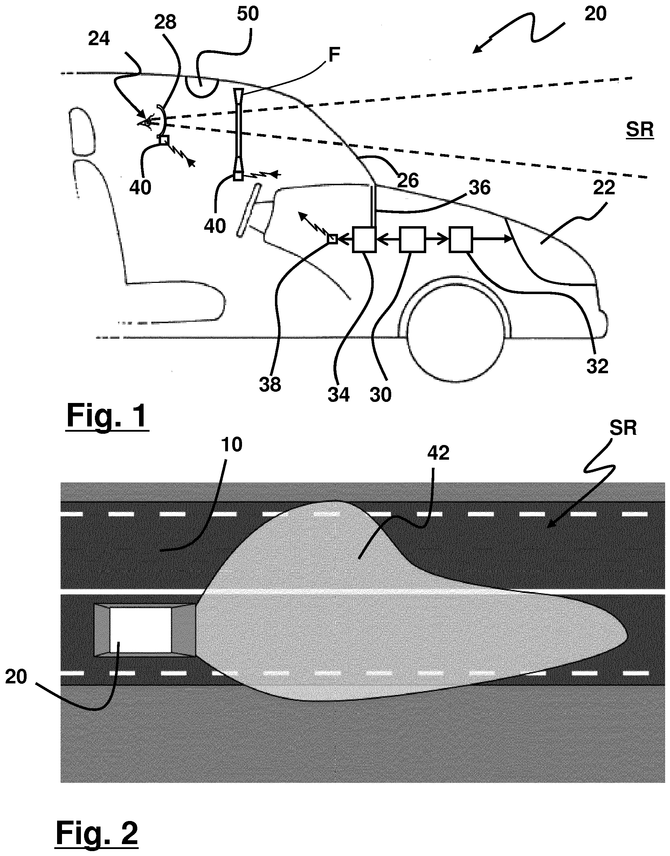

On a représenté schématiquement sur la Figure 1 une coupe partielle d'un véhicule désigné dans son ensemble par la référence 20, équipé de manière conventionnelle de projecteurs 22, et piloté par un conducteur, symbolisé par son oeil 24.

Le conducteur 24 observe la scène de route S, telle que celle qui est représentée schématiquement sur la Figure 3, devant le véhicule à travers le pare-brise 26.

Conformément à la présente invention, un écran à transmission variable est disposé dans le champ de vision du conducteur, entre ce dernier et la scène de route SR pour

- d'une part filtrer les rayons lumineux provenant des sources actives et potentiellement éblouissantes de manière à les atténuer, et
- d'autre part laisser passer la totalité des rayons lumineux provenant des sources passives et semi-actives, de manière à ne pas occulter les informations de sécurité qu'ils véhiculent.

Selon les modes de réalisation de l'invention, l'écran à transmission variable peut être constitué :

- d'un écran F proprement dit, placé entre le conducteur 24 et le pare-brise 26, par exemple rabattable à la façon d'un pare-soleil,
- du pare-brise 26 lui-même, ou
- d'une paire de lunettes 28, portées par le conducteur, à l'instar de lunettes de soleil ou de lunettes correctrices, un seul verre de lunette ayant été représenté sur la Figure 1.

Ces trois modes de réalisation ont été représentés simultanément sur la Figure 1, pour la commodité de l'exposé. Ce ne sont cependant que des variantes de réalisation, chacun d'entre eux tendant à obtenir le même résultat.

Dans la suite de la description, le terme « écran à transmission variable » sera utilisé pour désigner indifféremment :

- l'écran F, qu'il soit fixe ou de type pare-soleil rabattable,
- le pare-brise 26 ou
- une paire de lunettes 28.

Quel que soit le mode de réalisation, et conformément à la présente invention, le coefficient de transmission de l'écran à transmission variable est piloté en synchronisme avec le fonctionnement des projecteurs 22 du véhicule.

Selon la présente invention, les projecteurs 22 émettent un faisceau lumineux d'intensité variable, la variation de l'intensité du faisceau de croisement émis par les projecteurs 22 étant synchrone avec la variation du coefficient de transmission de l'écran à transmission variable.

En d'autres termes, les maxima d'intensité lumineuse émise par les projecteurs 22 coïncident avec les maxima du coefficient de transmission de l'écran à transmission variable, et les minima d'intensité lumineuse émise par les projecteurs 22 coïncident avec les minima du coefficient de transmission de l'écran à transmission variable.

De cette manière, la perception de la scène de route par le conducteur au travers de l'écran à transmission variable est optimale lorsque cette dernière est éclairée avec l'intensité lumineuse maximale.

Pour atteindre ce but, l'invention prévoit une centrale de commande 30 qui pilote :

- un driver ou circuit de gestion 32 pour l'alimentation des sources lumineuses des projecteurs 22, et
- un circuit de commande 34 du coefficient de transmission pour l'écran à transmission variable.

Le pilotage effectué par la centrale de commande 30 est tel que :

- le circuit de gestion 32 commande l'alimentation des sources lumineuses des projecteurs 22, de manière à ce que les projecteurs 22 émettent un faisceau lumineux d'intensité périodiquement variable, entre une valeur maximale et une valeur minimale, et que
- le circuit 34 commande le coefficient de transmission de l'écran à transmission variable, pour que ce dernier passe périodiquement d'une transparence maximale à une transparence minimale,
- les circuits 32 et 34 sont commandés en synchronisme, l'intensité émise par les projecteurs 22 étant maximale en même temps que la transparence de l'écran à transmission variable est maximale, et inversement, l'intensité émise par les projecteurs 22 étant minimale en même temps que la transparence de l'écran à transmission variable est minimale.

L'éclairage fourni par les projecteurs 22 étant variable, il convient que les sources lumineuses équipant ces projecteurs ne présentent pas d'inertie trop importante, autrement dit que la puissance lumineuse émise soit directement fonction de la puissance électrique qu'elles reçoivent. Les lampes à incandescence, de même que les lampes à décharge, ne remplissent cette condition qu'avec un temps de réponse qui est inadapté pour résoudre le problème de la présente invention, qui prévoit donc d'utiliser, pour les sources lumineuses des projecteurs 22, des diodes.

De telles diodes pourront être constituées par des diodes électroluminescentes, encore appelées LEDs, émettant de la lumière blanche, du type de celles qui sont utilisées pour équiper les projecteurs des véhicules modernes. Elles pourront également être constituées par des diodes laser, dont le rayon frappe une couche de phosphore, qui à son tour émet de la lumière blanche.

Selon le type de diodes utilisées, ou selon la conception des projecteurs 22, les sources lumineuses des projecteurs 22 pourront être constituées d'une ou de plusieurs de ces diodes.

La réaction de telles diodes, en termes d'émission lumineuse, à toute variation de leur alimentation électrique est quasiment instantanée, de sorte qu'elles permettent une commande précise de l'éclairement de la scène de route devant le véhicule, cet éclairement pouvant ainsi être rendu variable périodiquement avec une fréquence relativement élevée.

De même, l'écran à transmission variable pourra être conçu pour avoir un temps de réponse très faible, et permettre une variation rapide de son coefficient de transmission.

Dans ce but, l'écran à transmission variable pourra être constitué d'un écran à cristaux liquides, qui permet d'obtenir de tels temps de réaction rapide. L'écran à transmission variable pourra également être constitué par un système microélectromécanique, par exemple du type décrit dans le document US 7 684 105.

Si l'écran à transmission variable F est fixe, comme par exemple le pare-brise 26, il pourra être relié directement au faisceau électrique du véhicule pour assurer son alimentation électrique, et relié directement au circuit 34 de commande du coefficient de transmission. Cette double alimentation, en énergie électrique et en signaux de commande, est représentée sur la Figure 1 par la double liaison 36.

Si l'écran à transmission variable F est mobile, comme par exemple l'écran F de type pare-soleil ou la paire de lunettes 28, il pourra comprendre son alimentation électrique propre. En effet, la commande de l'état de transparence, ou du coefficient de transmission, d'un écran à cristaux liquides ou d'un système microélectromécanique, ne requiert qu'une puissance électrique minime, de sorte que des batteries au format des piles boutons sont suffisantes pour assurer un fonctionnement correct de l'écran à cristaux liquides ou d'un système microélectromécanique pendant une durée appréciable, surtout s'agissant des lunettes 28. Le terme « microélectromécanique » est utilisé dans la présente description pour désigner en français le concept connu de l'acronyme anglo-saxon MEMS (pour « MicroElectroMechanical System »).

De plus, pour un écran à transmission variable mobile, on pourra prévoir que la commande de son coefficient de transmission par le circuit 34 s'effectue sans fil, par exemple par ondes radio, infrarouges ou ultrasonores selon un protocole de communication sans fil, par exemple selon les normes Bluetooth ou Wi-Fi (marques déposées). Ces ondes seront appelées dans la suite de la description « ondes de télécommande ». Le circuit 34 comporte alors un émetteur 38 d'ondes de télécommande, et l'écran à transmission variable F ou les lunettes 28 sont pourvues d'un récepteur 40 de ces mêmes ondes de télécommande.

Le fonctionnement du système qui vient d'être décrit se déduit aisément des explications qui précèdent.

Lorsque, par suite de la baisse de la luminosité ambiante, l'allumage des sources lumineuses des projecteurs 22 est commandé, manuellement par le conducteur ou automatiquement par un capteur de luminosité ambiante, pour l'émission d'un faisceau lumineux de croisement, c'est-à-dire d'un faisceau 42 tel que celui qui est représenté sur la Figure 2 en vue de dessus, la centrale de commande 30 pilote le circuit de gestion 32 pour que les sources lumineuses des projecteurs 22 soient alimentées de manière périodique, selon le diagramme de la Figure 6.

Les sources lumineuses des projecteurs 22 reçoivent donc une puissance électrique P variable périodiquement entre une valeur maximale $P_{MAX}$ et une valeur minimale $P_{min}$, par exemple en mode PWM (pour l'expression anglo-saxonne « Pulse Width Modulation » signifiant Modulation de Largeur d'Impulsions), à une fréquence prédéterminée et avec un rapport cyclique prédéterminé, conformément au diagramme de la Figure 6A.

Les sources lumineuses étant constituées par des diodes, LEDs ou diodes laser, émettent de même un éclairement E, variant périodiquement, entre un éclairement maximal $E_{MAX}$ et un éclairement minimal $E_{min}$, à la même fréquence et avec le même rapport cyclique prédéterminé $\alpha$, comme on l'a représenté sur le diagramme de la Figure 6B. Sur cette Figure, on n'a pas tenu compte du temps de réponse des sources lumineuses, qui peut être considéré comme négligeable.

Si on désirait représenter ces temps de réponse des sources lumineuses sur la Figure 6B, il en résulterait un « basculement » de l'éclairement E d'un état vers l'autre accusant un retard par rapport à la puissance P alimentant ces sources lumineuses, représentée sur la Figure 6A.

On rappelle que le rapport cyclique $\alpha$ est déterminé par le ratio entre la durée $t_1$ pendant laquelle la puissance électrique est maximale, et la durée T de la période, et varie donc de 0 à 100 % :

$$\alpha = \frac{t_1}{T}$$

Une diode, LED ou laser, a une réaction pratiquement instantanée à une variation de la puissance électrique qui l'alimente. Il en résulte que l'éclairement émis par les sources lumineuses des projecteurs 22 varie avec le même rapport cyclique $\alpha$.

Si la valeur minimale $P_{min}$ de la puissance d'alimentation des sources lumineuses est nulle, l'éclairement minimal $E_{min}$ est lui aussi égal à zéro. Dans ces conditions, l'éclairement moyen $\overline{\overline{E}}$ émis par les sources lumineuses alimentées en PWM avec un rapport cyclique $\alpha$ est égal à :

$$\overline{E} = \alpha.E_{MAX}$$

Pour que l'éclairement de la scène de route soit conforme à la réglementation, il suffit donc que l'éclairement moyen fourni par les sources lumineuses alimentées en PWM soit égal à l'éclairement $E_{REG}$ qu'elles devraient émettre en régime continu pour fournir cet éclairement réglementaire, soit :

$$E_{MAX} = \frac{1}{\alpha}.E_{REG}$$

Compte tenu des caractéristiques des diodes, LEDs ou laser, utilisées, on en déduira facilement la puissance électrique $P_{REG}$ nécessaire pour alimenter les diodes afin qu'elles fournissent l'éclairement $E_{MAX}$ désiré pendant le temps $t_1$ à la fréquence 1/T.

Cette fréquence 1/T est choisie suffisamment élevée pour éviter tout phénomène de scintillation, à la fois pour le conducteur du véhicule 20 et pour les conducteurs des autres véhicules, croisés ou suivis. La fréquence 1/T sera par exemple de préférence supérieure à 100Hz pour bénéficier pleinement du phénomène de persistance rétinienne.

De cette manière, l'éclairage de la scène de route par les projecteurs 22 sera ressenti, par le conducteur du véhicule 20 aussi bien que par les autres conducteurs comme s'il s'agissait d'un éclairage conventionnel continu.

En revanche, conformément à l'invention, le conducteur du véhicule 20 observe cette scène de route à travers un écran à coefficient de transmission variable, qu'il s'agisse du pare-brise 26, de l'écran F ou de lunettes 28, dont le coefficient de transmission est variable avec la même fréquence que celle du fonctionnement des projecteurs 22 et le même rapport cyclique, ainsi que cela ressort du diagramme de la Figure 6C.

Le pare-brise 26, l'écran à transmission variable F ou les lunettes 28 ont ainsi un coefficient de transmission CT qui varie entre :

- une valeur maximale $CT_{MAX}$, pour laquelle la transparence est maximale pendant le temps $t_1$, et
- une valeur minimale $CT_{min}$, pour laquelle la transparence est minimale pendant le temps $t_2$,

comme on l'a représenté sur la Figure 6C.

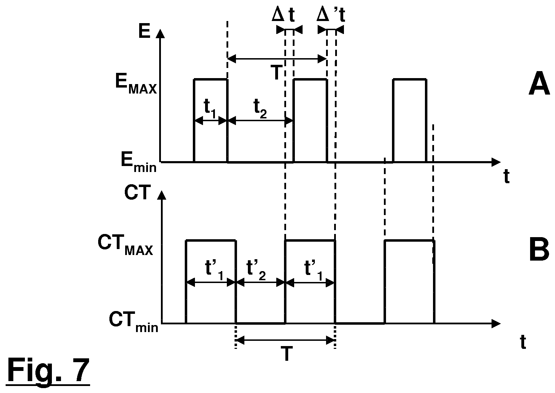

De préférence, comme on l'a représenté sur la Figure 7, la durée $t'_1$ pendant laquelle le coefficient de transmission présente sa valeur maximale $CT_{MAX}$ est supérieure à la durée $t_1$ pendant laquelle l'éclairement présente sa valeur maximale $E_{MAX}$, de manière à débuter un instant $\Delta t$ avant $t_1$ et à se terminer un instant $\Delta't$ après $t_1$. Cette variante de réalisation permet de s'assurer que :

- lorsque la source lumineuse 22 bascule vers son état d'éclairement maximal $E_{MAX}$, le coefficient de transmission CT présente déjà sa valeur maximale $CT_{MAX}$, et que
- lorsque le coefficient de transmission CT bascule vers sa valeur minimale $CT_{min}$, la source lumineuse 22 a déjà basculé vers son état d'éclairement minimal $E_{min}$.

On pourra cependant prévoir que le décalage à entre l'éclairement E et le coefficient de transmission CT soit dans l'autre sens, c'est-à-dire que :

- lorsque le coefficient de transmission CT bascule vers sa valeur maximale $CT_{MAX}$, la source lumineuse 22 soit déjà dans son état d'éclairement maximal $E_{MAX}$, et que
- lorsque la source lumineuse 22 bascule ers son état d'éclairement minimal $E_{min}$, le coefficient de transmission CT a déjà basculé vers sa valeur minimale $CT_{min}$.

La valeur du décalage $\Delta t$ ou $\Delta't$ est faible devant les durées $t_1$ ou $t_2$, que ce décalage $\Delta t$ ou $\Delta't$ soit situé avant le début de $t_1$ ou de $t_2$, ou avant la fin de $t_1$ ou de $t_2$. Dans tous les cas de figure, on peut donc dire que l'éclairement (E) atteint sa valeur maximale ($E_{MAX}$) sensiblement lorsque le coefficient de transmission (CT) de l'écran (26, F, 28) atteint sa valeur maximale ($CT_{MAX}$).

En d'autres termes, la première variante ci-dessus (CT devient égal à $CT_{MAX}$ quand la source 22 a déjà atteint $E_{MAX}$, et la source 22 bascule vers $E_{min}$ quand CT est déjà égal à $CT_{min}$) permet de s'assurer que le coefficient de transmission aura sa valeur maximale $CT_{MAX}$ pendant toute la durée pendant laquelle la source lumineuse sera dans son état d'éclairement maximal $E_{MAX}$, et donc que le conducteur aura une vision optimale de la scène de route telle qu'éclairée par la source lumineuse 22.

La valeur $CT_{MAX}$ est celle pour laquelle l'écran à coefficient de transmission variable ou les verres de lunettes 28 ont leur transparence maximale. Dans la plupart des cas, des écrans à cristaux liquides, de même que les systèmes microélectromécaniques, ont cet état en l'absence de toute excitation électrique, c'est-à-dire à l'état de repos, et ne sont opaques que sous l'effet d'un champ électrique. Dans ces cas, la valeur $CT_{MAX}$ correspond à une excitation minimale des cristaux liquides ou des systèmes microélectromécaniques constituant l'écran à coefficient de transmission variable ou les verres de lunettes 28.

Dans certains cas, l'état de repos d'un écran à coefficient de transmission variable pourra être celui où ils présentent leur opacité maximale, ne devenant transparents que sous l'effet d'un champ électrique. Dans cette éventualité, la valeur $CT_{MAX}$ correspond à une excitation maximale des écrans à coefficient de transmission variable constituant les verres de lunettes 28.

Les explications qui précèdent s'appliquent, mutatis mutandis, à la valeur $CT_{min}$ du coefficient de transmission des verres de lunettes 28.

Le diagramme de la Figure 6C représente ainsi la variation du coefficient de transmission CT des verres de lunettes 28, et non la variation du signal d'excitation de ces verres de lunettes.

De préférence, la valeur minimale $CT_{min}$ du coefficient de transmission CT est sensiblement nulle pendant le temps $t_2$ ou, en d'autres termes, l'écran à transmission variable est sensiblement opaque pendant le temps $t_2$.

Dans ces conditions, en supposant que les lunettes 28 constituent l'écran à transmission variable utilisé :

- les lunettes 28 sont opaques pendant le temps $t_2$, c'est-à-dire pendant que les sources lumineuses des projecteurs 22 sont éteintes, et
- la transparence des lunettes 28 est maximale pendant le temps $t_1$, c'est-à-dire pendant que les sources lumineuses des projecteurs 22 illuminent la scène de route SR avec l'intensité maximale.

Le conducteur 24 a donc l'impression de voir la scène de route SR comme si elle était éclairée par des projecteurs conventionnels, à éclairage continu.

Cependant, grâce à la présente invention, et en considérant la Figure 2, le conducteur 24 voit, pendant le temps $t_1$ où les lunettes 28 ont leur transparence maximale :

- tous les éléments passifs éclairés par le faisceau de croisement 42 dans la scène de route, comme la route 10, les bas-côtés 12,
- tous les éléments semi-actifs dans ce faisceau 42, qui reçoivent la lumière des projecteurs 22 et la rétro-réfléchissent vers le véhicule 20 et le conducteur 24, comme les panneaux de signalisation 14 et les catadioptres 19 des véhicules suivis, et
- tous les éléments actifs, comme les projecteurs 18 des véhicules croisés.

Pendant le temps $t_2$, les lunettes sont opaques, et le conducteur 24 ne voit donc rien de la scène de route.

Les temps $t_1$ et $t_2$ se succédant à la fréquence 1/t d'environ 100 Hz, l'oeil 24 du conducteur effectue une intégration de ses observations, ce qui procure les résultats suivants.

Les éléments passifs sont éclairés périodiquement pendant les temps $t_1$,

- à la fréquence 1/T,
- avec un rapport cyclique α,
- avec un éclairement $E_{MAX} = \dfrac{1}{\alpha} . E_{REG}$ .

La moyenne des observations successives des éléments passifs est donc égale à l'observation qui serait faite avec un éclairement constant $E_{REG}$. Le conducteur 24 a donc une vision des éléments passifs inchangée par rapport à un éclairage conventionnel.

Les éléments semi-actifs sont éclairés dans les mêmes conditions que les éléments passifs, et renvoient une partie notable de la lumière qu'ils reçoivent approximativement dans la direction d'où elle provient. Si par exemple le rapport cyclique α est égal à 50%, ils recevront une quantité de lumière $Q_2$ deux fois plus importante que la quantité réglementaire $Q_{REG}$, pendant un temps deux fois moins long. Ils renverront donc autant de lumière que s'ils avaient été éclairés de manière continue avec la quantité réglementaire $Q_{REG}$.

La moyenne des observations successives des éléments semi-actifs est donc égale à l'observation qui serait faite avec un éclairement constant $E_{REG}$. Le conducteur 24 a donc une vision des éléments semi-actifs inchangée par rapport à un éclairage conventionnel.

Les éléments actifs reçoivent une quantité de lumière tout à fait négligeable par rapport à celle qu'ils émettent. Par contre, ils ne peuvent être observés par le conducteur 24 que pendant le temps t1, pendant lequel l'écran à transmission variable est à son maximum de transmission.

Les éléments actifs ne sont donc visibles que pendant une fraction de temps égale au rapport cyclique α. Leur luminosité apparente, à travers l'écran à transmission variable, est donc diminuée par rapport à leur luminosité réelle d'un facteur α.

On obtient donc bien le résultat escompté : en considérant la Figure 2, tous les éléments passifs et semi-actifs situés dans le faisceau de croisement 42 sont visibles dans les mêmes conditions que lors d'un éclairage conventionnel. En revanche, tous les éléments actifs, tels que les projecteurs 18 des véhicules croisés, sont observés avec une luminosité diminuée d'un facteur α.

C'est bien le phénomène observé, représenté sur les figures 4A et 4B.

La Figure 4A représente une scène de route conventionnelle, dans laquelle on peut voir la route 10, les éléments 12 extérieurs à la route, les panneaux de signalisation 14 et les projecteurs des véhicules croisés 18.

La Figure 4B représente la même scène de route, observée à travers l'écran à transmission variable de l'invention. On voit bien que tous les éléments de cette scène de route sont visibles dans les mêmes conditions que sur la Figure 4A, qu'il s'agisse des éléments passifs ou des éléments semi-actifs comme les panneaux de signalisation, à l'exception des éléments actifs tels que les projecteurs 18 des véhicules croisés, dont la luminosité a été réduite.

Grâce à l'invention, en faisant varier le rapport cyclique α, il sera possible de conserver une visibilité constante des éléments passifs et semi-actifs, et de diminuer à volonté la luminosité des éléments actifs présents dans la scène de route. Même si les projecteurs des véhicules croisés sont éblouissants, l'invention permet d'en réduire la luminosité, jusqu'à ce qu'ils soient moins éblouissants, sans modifier la perception des autres détails de la scène de route.

L'invention présente de nombreux avantages supplémentaires, dans le mode de réalisation sous forme de lunettes 28 portées par le conducteur. En effet, comme on l'a représenté sur la Figure 5, le champ visuel du conducteur inclut, en plus de la scène de route devant lui à travers le pare-brise 26, le tableau de bord du véhicule, présentant diverses indications visuelles utiles pour le conducteur.

Ces indications visuelles peuvent être des cadrans 44 d'indicateurs de vitesse ou de compte-tours, ou des voyants lumineux 46 témoins du fonctionnement de certains équipements du véhicule. Les cadrans 44 et les voyants 46 sont allumés lorsque les projecteurs 22 sont allumés, et constituent des indications visuelles lumineuses.

D'autres indications visuelles 48 lumineuses peuvent être présentées au conducteur en dehors du tableau de bord, par exemple comme représenté sur la Figure 5, par un système de vision dit « tête haute », ou « HUD » pour l'expression anglo-saxonne « Head Up Display », formant une image virtuelle à l'aide du pare-brise 26.

Ces diverses indications visuelles lumineuses à l'attention du conducteur étant par nature importantes pour la sécurité, il convient que le conducteur en ait la vision la plus claire possible. L'invention permet également d'obtenir ce résultat, en prévoyant que l'allumage de ces indications visuelles soit synchronisé avec la variation du coefficient de transmission de l'écran à transmission variable, en l'occurrence des lunettes 28.

Selon l'invention, la luminosité des indications visuelles 44, 46 et/ou 48 est augmentée d'un facteur égal à l'inverse du rapport cyclique α pendant le temps $t_1$. L'écran à transmission variable a ainsi pour effet d'affaiblir la luminosité de tous les objets situés dans le champ visuel du conducteur, à l'exception :

- de la scène de route éclairée par ses propres projecteurs,
- des indications visuelles, du tableau de bord ou du système de vision tête haute.

Une autre source potentielle de gêne pour le conducteur est constituée par le système d'éclairage intérieur du véhicule, lorsque par exemple un ou plusieurs passagers désirent l'utiliser pour pouvoir lire. L'utilisation du plafonnier 50, tel que symbolisé sur la Figure 1, peut perturber le conducteur, en éclairant des détails dans son champ visuel qui risquent de détourner son attention.

La présente invention permet également de résoudre ce problème. En effet, l'invention peut prévoir que l'éclairage intérieur 50 ne soit allumé que pendant les durées $t_2$, c'est-à-dire pendant les durées où l'écran à transmission variable, en l'occurrence les lunettes 28, sont opaques. L'allumage de l'éclairage intérieur n'est alors pas perçu par le conducteur, alors que les passagers peuvent en disposer à loisir.

On a donc bien réalisé un procédé et un dispositif d'aide à la conduite nocturne d'un véhicule automobile, qui permet à un conducteur d'un véhicule d'avoir dans son champ de vision :

- tous les éléments passifs et semi-actifs éclairés dans la scène de route par le faisceau de croisement émis par les projecteurs de son véhicule, avec une intensité lumineuse égale à celle dont il a l'habitude,
- tous les éléments actifs avec une intensité lumineuse réduite, de manière fixe ou variable en changeant le rapport cyclique commun de ses projecteurs et de son écran à transmission variable, et
- toutes les indications visuelles relatives à la conduite nocturne du véhicule, également avec une intensité lumineuse égale à celle dont il a l'habitude.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple qu'on pourra disposer deux écrans à transmission variable successifs, par exemple le pare-brise 26 et un écran mobile F de type pare soleil, pour affecter à des régions particulières du champ de vision du conducteur des atténuations différentes.

**Revendications**

1. Dispositif d'aide à la conduite nocturne d'un véhicule automobile (20), le véhicule (20) étant équipé d'au moins un dispositif d'éclairage (22) pour émettre un faisceau d'éclairage réglementaire (42) de la scène de route (S) en avant du véhicule (20),

   - l'éclairement (E) émis par le dispositif d'éclairage (22) étant variable entre une valeur maximale ($E_{MAX}$) et une valeur minimale ($E_{min}$)
   - le dispositif comportant au moins un écran (26, F, 28) à transmission variable disposé entre la scène de route (S) et le conducteur (24) du véhicule (20),
   - le coefficient de transmission (CT) de l'écran (26, F, 28) étant variable entre une valeur maximale ($CT_{MAX}$) et une valeur minimale ($CT_{min}$),
   - l'allumage d'au moins une source lumineuse du dispositif d'éclairage (22) et le coefficient de transmission (CT) de l'écran à transmission variable étant pilotés par la même centrale de commande (30) en synchronisme,
   - l'éclairement (E) atteignant sa valeur maximale ($E_{MAX}$) sensiblement lorsque le coefficient de transmission (CT) de l'écran (26, F, 28) atteint sa valeur maximale ($CT_{MAX}$)

   **caractérisé en ce que** la centrale de commande (30) pilote un circuit de gestion (32) d'alimentation de la source lumineuse du dispositif d'éclairage (22) et un émetteur (38) d'ondes de télécommande (OT) à destination d'un récepteur (40), le coefficient de transmission (CT) de l'écran à transmission variable étant commandé par ledit récepteur (40) recevant les ondes de télécommande émises par l'émetteur (38) d'ondes de télécommande (OT).

2. Dispositif selon la revendication précédente, **caractérisé en ce que** l'écran à transmission variable (26, F, 28) est constitué :

   - par le pare-brise (26) du véhicule (20),
   - par un écran (F) disposé entre le pare-brise (26) du véhicule (20) et le conducteur (24) du véhicule (20), ou
   - par des lunettes (28) portées par le conducteur (24) du véhicule (20).

3. Dispositif selon l'une des revendications précédentes, **caractérisé en ce que** la centrale de commande (30) pilote :

   - le circuit de gestion (32) d'alimentation de la source lumineuse du dispositif d'éclairage (22) et
   - l'émetteur (38) d'ondes de télécommande (OT) à destination du récepteur (40),

   de telle sorte que les variations de l'éclairement (E) émis par le dispositif d'éclairage (22) et du coefficient de transmission (CT) de l'écran à transmission variable (26, F, 28) soient synchrones, et atteignent leurs valeurs maximales ($E_{MAX}$, $CT_{MAX}$) en même temps.

4. Dispositif selon l'une des revendications 1 ou 2, **caractérisé en ce que** la centrale de commande (30) pilote :

   - le circuit de gestion (32) d'alimentation de la source lumineuse du dispositif d'éclairage (22) et
   - l'émetteur (38) d'ondes de télécommande (OT) à destination du récepteur (40),

   de telle sorte que la durée ($t'_1$) pendant laquelle le

coefficient de transmission présente sa valeur maximale ($CT_{MAX}$) est supérieure à la durée ($t_1$) pendant laquelle l'éclairement présente sa valeur maximale ($E_{MAX}$).

5. Dispositif selon l'une des revendications précédentes, **caractérisé en ce que** l'éclairement (E) émis par le dispositif d'éclairage (22) et le coefficient de transmission (CT) de l'écran à transmission variable (26, F, 28) sont variables selon un mode de Modulation de Largeur d'Impulsions (PWM).

6. Dispositif selon la revendication précédente, **caractérisé en ce que** la valeur minimale ($E_{min}$) de l'éclairement (E) est nulle.

7. Dispositif selon la revendication 5, **caractérisé en ce que** la valeur minimale ($CT_{min}$) du coefficient de transmission (CT) de l'écran à transmission variable (26, F, 28) est sensiblement nulle.

8. Dispositif selon l'une des revendications précédentes, **caractérisé en ce que** l'émetteur (38) d'ondes de télécommande (OT) et le récepteur (40) de ces ondes de télécommande (OT) communiquent par ondes radio, infrarouges ou ultrasonores.

9. Dispositif selon la revendication précédente, **caractérisé en ce que** l'émetteur (38) d'ondes de télécommande (OT) et le récepteur (40) de ces ondes de télécommande (OT) communiquent selon un protocole de communication sans fil.

10. Dispositif selon l'une des revendications précédentes, **caractérisé en ce que** la source lumineuse du dispositif d'éclairage (22) est une diode électroluminescente ou une diode laser, la source lumineuse étant alimentée par un circuit de gestion (32), et recevant une puissance électrique (P) variable périodiquement entre une valeur maximale ($P_{MAX}$) et une valeur minimale ($P_{min}$).

11. Dispositif selon la revendication précédente, **caractérisé en ce que** la puissance électrique (P) est variable selon un mode de Modulation de Largeur d'Impulsions.

12. Dispositif selon l'une des revendications précédentes, **caractérisé en ce que** l'écran à transmission variable (26, F, 28) est constitué d'un écran à cristaux liquides.

13. Dispositif selon l'une des revendications 1 à 11, **caractérisé en ce que** l'écran à transmission variable (26, F, 28) est constitué d'un système microélectromécanique.

14. Dispositif selon l'une des revendications 12 ou 13, **caractérisé en ce que** l'écran à transmission variable (26, F, 28) est associé à une alimentation électrique autonome.

15. Dispositif selon l'une quelconque des revendications précédentes, **caractérisé en ce que** le coefficient de transmission (CT) de l'écran à transmission variable (26, F, 28) est commandé en synchronisme avec des indications visuelles lumineuses (44, 46, 48) présentées par le tableau de bord du véhicule et relatives au fonctionnement ou à l'environnement du véhicule.

16. Dispositif selon la revendication précédente, **caractérisé en ce que** la luminosité des indications visuelles (44, 46, 48) est augmentée d'un facteur égal à l'inverse du rapport cyclique ($\alpha$) du mode de Modulation de Largeur d'Impulsions (PWM) quand le coefficient de transmission (CT) de l'écran à transmission variable (26, F, 28) est à sa valeur maximale ($CT_{MAX}$).

17. Dispositif selon l'une quelconque des revendications précédentes, **caractérisé en ce que** le coefficient de transmission (CT) de l'écran à transmission variable (26, F, 28) est commandé en synchronisme avec l'éclairage intérieur (50) du véhicule (20), l'éclairage intérieur (50) n'étant allumé que lorsque le coefficient de transmission (CT) de l'écran à transmission variable est à sa valeur minimale ($CT_{min}$).

18. Écran à transmission variable (26, F, 28) apte à être disposé entre le conducteur (24) d'un véhicule automobile (20) et la scène de route (SR) en avant du véhicule (20), **caractérisé en ce que** le coefficient de transmission (CT) de l'écran (26, F, 28) est variable selon un mode de Modulation de Largeur d'Impulsions (PWM) entre une valeur maximale ($CT_{MAX}$) et une valeur minimale ($CT_{min}$), **caractérisé en ce que** le coefficient de transmission (CT) de l'écran à transmission variable (26, F, 28) est piloté par une centrale de commande (30) selon un protocole de communication sans fil, par des ondes de télécommande (OT) émises par un émetteur de la centrale de commande (30) et reçues par un récepteur (40).

**Patentansprüche**

1. Vorrichtung zur Nachtfahrhilfe für ein Kraftfahrzeug (20), wobei das Fahrzeug (20) mit wenigstens einer Beleuchtungsvorrichtung (22) ausgerüstet ist, um ein Lichtbündel zur ordnungsgemäßen Beleuchtung (42) der Straßenszene (S) vor dem Fahrzeug (20) auszusenden,

   - wobei die von der Beleuchtungsvorrichtung (22) ausgestrahlte Beleuchtung (E) zwischen einem maximalen Wert ($E_{MAX}$) und einem minimalen Wert ($E_{min}$) variabel ist,

- wobei die Vorrichtung wenigstens einen Schirm (26, F, 28) mit variabler Durchlässigkeit aufweist, der zwischen der Straßenszene (S) und dem Fahrer (24) des Fahrzeugs (20) angeordnet ist,

- wobei der Transmissionskoeffizient (CT) des Schirms (26, F, 28) zwischen einem maximalen Wert ($CT_{MAX}$) und einem minimalen Wert ($CT_{min}$) variabel ist,

- wobei das Einschalten wenigstens einer Lichtquelle der Beleuchtungsvorrichtung (22) und der Transmissionskoeffizient (CT) des Schirms mit variabler Durchlässigkeit von derselben zentralen Steuereinheit (30) synchron vorgesteuert werden,

- wobei die Beleuchtung (E) ihren maximalen Wert ($E_{MAX}$) im Wesentlichen erreicht, wenn der Transmissionskoeffizient (CT) des Schirms (26, F, 28) seinen maximalen Wert ($CT_{MAX}$) erreicht,

**dadurch gekennzeichnet, dass** die zentrale Steuereinheit (30) eine Schaltung zum Management (32) der Stromversorgung der Lichtquelle der Beleuchtungsvorrichtung (22) und einen Sender (38) von Fernsteuerungswellen (OT), die für einen Empfänger (40) bestimmt sind, vorsteuert, wobei der Transmissionskoeffizient (CT) des Schirms mit variabler Durchlässigkeit von dem Empfänger (40) gesteuert wird, der die Fernsteuerungswellen empfängt, die von dem Sender (38) von Fernsteuerungswellen (OT) gesendet werden.

2. Vorrichtung nach dem vorhergehenden Anspruch, **dadurch gekennzeichnet, dass** der Schirm mit variabler Durchlässigkeit (26, F, 28) besteht:

- aus der Windschutzscheibe (26) des Fahrzeugs (20),
- aus einem Schirm (F), der zwischen der Windschutzscheibe (26) des Fahrzeugs (20) und dem Fahrer (24) des Fahrzeugs (20) angeordnet ist, oder
- aus einer Brille (28), die von dem Fahrer (24) des Fahrzeugs (20) getragen wird.

3. Vorrichtung nach einem der vorhergehenden Ansprüche, **dadurch gekennzeichnet, dass** die zentrale Steuereinheit (30) vorsteuert:

- die Schaltung zum Management (32) der Stromversorgung der Lichtquelle der Beleuchtungsvorrichtung (22) und
- den Sender (38) von Fernsteuerungswellen (OT), die für den Empfänger (40) bestimmt sind,

derart, dass die Änderungen der von der Beleuchtungsvorrichtung (22) ausgestrahlten Beleuchtung (E) und des Transmissionskoeffizienten (CT) des Schirms mit variabler Durchlässigkeit (26, F, 28) synchron erfolgen und ihre maximalen Werte ($E_{MAX}$, $CT_{MAX}$) gleichzeitig erreichen.

4. Vorrichtung nach einem der Ansprüche 1 oder 2, **dadurch gekennzeichnet, dass** die zentrale Steuereinheit (30) vorsteuert:

- die Schaltung zum Management (32) der Stromversorgung der Lichtquelle der Beleuchtungsvorrichtung (22) und
- den Sender (38) von Fernsteuerungswellen (OT), die für den Empfänger (40) bestimmt sind,

derart, dass die Dauer ($t'_1$), während der der Transmissionskoeffizient seinen maximalen Wert ($CT_{MAX}$) aufweist, größer als die Dauer ($t_1$) ist, während der die Beleuchtung ihren maximalen Wert ($E_{MAX}$) aufweist.

5. Vorrichtung nach einem der vorhergehenden Ansprüche, **dadurch gekennzeichnet, dass** die von der Beleuchtungsvorrichtung (22) ausgestrahlte Beleuchtung (E) und der Transmissionskoeffizient (CT) des Schirms mit variabler Durchlässigkeit (26, F, 28) gemäß einem Modus der Pulsweitenmodulation (PWM) variabel sind.

6. Vorrichtung nach dem vorhergehenden Anspruch, **dadurch gekennzeichnet, dass** der minimale Wert ($E_{min}$) der Beleuchtung (E) gleich null ist.

7. Vorrichtung nach Anspruch 5, **dadurch gekennzeichnet, dass** der minimale Wert ($CT_{min}$) des der Transmissionskoeffizienten (CT) des Schirms mit variabler Durchlässigkeit (26, F, 28) im Wesentlichen gleich null ist.

8. Vorrichtung nach einem der vorhergehenden Ansprüche, **dadurch gekennzeichnet, dass** der Sender (38) von Fernsteuerungswellen (OT) und der Empfänger (40) dieser Fernsteuerungswellen (OT) über Funk-, Infrarot- oder Ultraschallwellen kommunizieren.

9. Vorrichtung nach dem vorhergehenden Anspruch, **dadurch gekennzeichnet, dass** der Sender (38) von Fernsteuerungswellen (OT) und der Empfänger (40) dieser Fernsteuerungswellen (OT) gemäß einem Protokoll der drahtlosen Kommunikation kommunizieren.

10. Vorrichtung nach einem der vorhergehenden Ansprüche, **dadurch gekennzeichnet, dass** die Lichtquelle der Beleuchtungsvorrichtung (22) eine lichtemittierende Diode oder eine Laserdiode ist, wobei die Lichtquelle von einer Management-Schaltung (32) mit Strom versorgt wird und eine elektrische Leistung (P) empfängt, die periodisch zwischen einem maximalen Wert ($P_{MAX}$) und einem minimalen Wert ($P_{min}$) variabel ist.

11. Vorrichtung nach dem vorhergehenden Anspruch, **dadurch gekennzeichnet, dass** die elektrische Leistung (P) gemäß einem Modus der Pulsweitenmodulation variabel ist.

12. Vorrichtung nach einem der vorhergehenden Ansprüche, **dadurch gekennzeichnet, dass** der Schirm mit variabler Durchlässigkeit (26, F, 28) aus einem Flüssigkristallschirm besteht.

13. Vorrichtung nach einem der Ansprüche 1 bis 11, **dadurch gekennzeichnet, dass** der Schirm mit variabler Durchlässigkeit (26, F, 28) aus einem mikroelektromechanischen System besteht.

14. Vorrichtung nach einem der Ansprüche 12 oder 13, **dadurch gekennzeichnet, dass** der Schirm mit variabler Durchlässigkeit (26, F, 28) einer autonomen Stromversorgung zugeordnet ist.

15. Vorrichtung nach einem der vorhergehenden Ansprüche, **dadurch gekennzeichnet, dass** der Transmissionskoeffizient (CT) des Schirms mit variabler Durchlässigkeit (26, F, 28) synchron mit visuellen Lichtanzeigen (44, 46, 48) gesteuert wird, die vom Armaturenbrett des Fahrzeugs präsentiert werden und den Betrieb oder die Umgebung des Fahrzeugs betreffen.

16. Vorrichtung nach dem vorhergehenden Anspruch, **dadurch gekennzeichnet, dass** die Helligkeit der visuellen Anzeigen (44, 46, 48) um einen Faktor erhöht ist, der gleich dem Kehrwert des Zyklusverhältnisses ($\alpha$) der Pulsweitenmodulation (PWM) ist, wenn der Transmissionskoeffizient (CT) des Schirms mit variabler Durchlässigkeit (26, F, 28) seinen maximalen Wert ($CT_{MAX}$) hat.

17. Vorrichtung nach einem der vorhergehenden Ansprüche, **dadurch gekennzeichnet, dass** der Transmissionskoeffizient (CT) des Schirms mit variabler Durchlässigkeit (26, F, 28) synchron mit der Innenbeleuchtung (50) des Fahrzeugs (20) gesteuert wird, wobei die Innenbeleuchtung (50) nur dann eingeschaltet wird, wenn der Transmissionskoeffizient (CT) des Schirms mit variabler Durchlässigkeit seinen minimalen Wert ($CT_{min}$) hat.

18. Schirm mit variabler Durchlässigkeit (26, F, 28), welcher geeignet ist, zwischen dem Fahrer (24) eines Kraftfahrzeugs (20) und der Straßenszene (SR) vor dem Fahrzeug (20) angeordnet zu werden, **dadurch gekennzeichnet, dass** der Transmissionskoeffizient (CT) des Schirms (26, F, 28) gemäß einem Modus der Pulsweitenmodulation (PWM) zwischen einem maximalen Wert ($CT_{MAX}$) und einem minimalen Wert ($CT_{min}$) variabel ist, **dadurch gekennzeichnet, dass** der Transmissionskoeffizient (CT) des Schirms mit variabler Durchlässigkeit (26, F, 28) von einer zentralen Steuereinheit (30) gemäß einem Protokoll der drahtlosen Kommunikation durch Fernsteuerungswellen (OT) vorgesteuert wird, die von einem Sender der zentralen Steuereinheit (30) gesendet und durch einen Empfänger (40) empfangen werden.

## Claims

1. Device for assisting the nighttime driving of a motor vehicle (20), the vehicle (20) being fitted with at least one lighting device (22) for emitting a beam for the illumination (42) of the road scene (S) in front of the vehicle (20) in accordance with regulations,

   - the illumination (E) emitted by the lighting device (22) being variable between a maximum value ($E_{MAX}$) and a minimum value ($E_{min}$)
   - the device including at least one variable-transmission screen (26, F, 28) placed between the road scene (S) and the driver (24) of the vehicle (20),
   - the coefficient of transmission (CT) of the screen (26, F, 28) being variable between a maximum value ($CT_{MAX}$) and a minimum value ($CT_{min}$),
   - the switching on of at least one light source of the lighting device (22) and the coefficient of transmission (CT) of the variable-transmission screen being controlled by the same control unit (30) in synchronization,
   - the illumination (E) reaching its maximum value ($E_{MAX}$) substantially when the coefficient of transmission (CT) of the screen (26, F, 28) reaches its maximum value ($CT_{MAX}$)

   **characterized in that** the control unit (30) controls a circuit (32) for regulating the power supply to the light source of the lighting device (22) and a transmitter (38) of remote control waves (OT) directed toward a receiver (40), the coefficient of transmission (CT) of the variable-transmission screen being controlled by said receiver (40) receiving the remote control waves transmitted by the transmitter (38) of the remote control waves (OT).

2. Device according to the preceding claim, **characterized in that** the variable-transmission screen (26, F, 28) is formed by:

- the windshield (26) of the vehicle (20),
- a screen (F) placed between the windshield (26) of the vehicle (20) and the driver (24) of the vehicle (20), or
- glasses (28) worn by the driver (24) of the vehicle (20).

3. Device according to either of the preceding claims, **characterized in that** the control unit (30) controls:

- the circuit (32) for regulating the power supply to the light source of the lighting device (22), and
- the transmitter (38) of remote control waves (OT) directed toward the receiver (40),

in such a way that the variations of the illumination (E) emitted by the lighting device (22) and of the coefficient of transmission (CT) of the variable-transmission screen (26, F, 28) are synchronized, and reach their maximum values ($E_{MAX}$, $CT_{MAX}$) at the same time.

4. Device according to either of Claims 1 and 2, **characterized in that** the control unit (30) controls:

- the circuit (32) for regulating the power supply to the light source of the lighting device (22), and
- the transmitter (38) of remote control waves (OT) directed toward the receiver (40),

in such a way that the duration ($t'_1$) for which the coefficient of transmission has its maximum value ($CT_{MAX}$) is greater than the duration ($t_1$) for which the illumination has its maximum value ($E_{MAX}$).

5. Device according to one of the preceding claims, **characterized in that** the illumination (E) emitted by the lighting device (22) and the coefficient of transmission (CT) of the variable-transmission screen (26, F, 28) are variable according to a pulse width modulation (PWM) mode.

6. Device according to the preceding claim, **characterized in that** the minimum value ($E_{min}$) of the illumination (E) is zero.

7. Device according to Claim 5, **characterized in that** the minimum value ($CT_{min}$) of the coefficient of transmission (CT) of the variable-transmission screen (26, F, 28) is substantially zero.

8. Device according to one of the preceding claims, **characterized in that** the transmitter (38) of remote control waves (OT) and the receiver (40) of these remote control waves (OT) communicate by means of radio, infrared or ultrasonic waves.

9. Device according to the preceding claim, **characterized in that** the transmitter (38) of remote control waves (OT) and the receiver (40) of these remote control waves (OT) communicate according to a wireless communication protocol.

10. Device according to one of the preceding claims, **characterized in that** the light source of the lighting device (22) is a light-emitting diode or a laser diode, the light source being supplied with power by a regulating circuit (32), and receiving electrical power (P) which varies periodically between a maximum ($P_{MAX}$) and a minimum ($P_{min}$) value.

11. Device according to the preceding claim, **characterized in that** the electrical power (P) is variable according to a pulse width modulation mode.

12. Device according to one of the preceding claims, **characterized in that** the variable-transmission screen (26, F, 28) is formed by a liquid crystal screen.

13. Device according to one of Claims 1 to 11, **characterized in that** the variable-transmission screen (26, F, 28) is formed by a microelectromechanical system.

14. Device according to either of Claims 12 and 13, **characterized in that** the variable-transmission screen (26, F, 28) is associated with a stand-alone electrical power supply.

15. Device according to any one of the preceding claims, **characterized in that** the coefficient of transmission (CT) of the variable-transmission screen (26, F, 28) is controlled in synchronization with luminous visual displays (44, 46, 48) presented by the vehicle dashboard and relating to the operation or the environment of the vehicle.

16. Device according to the preceding claim, **characterized in that** the brightness of the visual displays (44, 46, 48) is increased by a factor equal to the inverse of the duty cycle ($\alpha$) of the pulse width modulation (PWM) mode when the coefficient of transmission (CT) of the variable-transmission screen (26, F, 28) is at its maximum value ($CT_{MAX}$).

17. Device according to any one of the preceding claims, **characterized in that** the coefficient of transmission (CT) of the variable-transmission screen (26, F, 28) is controlled in synchronization (50) with the interior lighting of the vehicle (20), the interior lighting (50) being switched on only when the coefficient of transmission (CT) of the variable-transmission screen is at its minimum value ($CT_{min}$).

18. Variable-transmission screen (26, F, 28) adapted to be placed between the driver (24) of a motor vehicle (20) and the road scene (SR) in front of the vehicle (20) **characterized in that** the coefficient of transmission (CT) of the screen (26, F, 28) is variable according to a pulse width modulation (PWM) mode between a maximum value ($CT_{MAX}$) and a minimum value ($CT_{min}$), **characterized in that** the coefficient of transmission (CT) of the variable-transmission screen (26, F, 28) is controlled by a control unit (30) according to a wireless communication protocol, by means of remote control waves (OT) transmitted by a transmitter of the control unit (30) and received by a receiver (40).

**Fig. 1**

**Fig. 2**

**Fig. 3**

A          B

**Fig. 4**

**Fig. 5**

**Fig. 6**

**Fig. 7**

## RÉFÉRENCES CITÉES DANS LA DESCRIPTION

**Documents brevets cités dans la description**

- FR 2846756
- EP 0498143 A1
- WO 9620846 A
- US 5486938 A
- US 7684105 B